# FASCICULE DE BREVET EUROPEEN

(11) **EP 0 597 028 B1**
(45) Date de publication et mention de la délivrance du brevet: **26.02.1997**
(21) Numéro de dépôt: 92917722.8
(22) Date de dépôt: 30.07.1992
(51) Int. Cl.: G06F 15/16

(54) **ARCHITECTURE DE SYSTEME EN TABLEAU DE PROCESSEURS A STRUCTURE PARALLELE**
VORRICHTUNG MIT PARALLELER PROZESSOR MATRIX
SYSTEM ARCHITECTURE HAVING PARALLEL PROCESSOR ARRAY

(30) Priorité: 30.07.1991 FR 9109649
(43) Date de publication de la demande: 18.05.1994
(73) Titulaire: COMMISSARIAT A L'ENERGIE ATOMIQUE, 75015 Paris (FR)
(72) Inventeur: COLLETTE, Thierry, F-92340 Bourg-la-Reine (FR); KAISER, Josef, F-91680 Bruyères-le-Chatel (FR); SCHMIT, Renaud, F-28700 Beville-le-Comte (FR); ES-SAFI, Hassane, F-91400 Orsay (FR)
(74) Mandataire: Dubois-Chabert, Guy
(86) Numéro de dépôt international: FR9200751
(87) Numéro de publication internationale: WO9303441

(56) Documents cités:
- EP-A- 0 194 462
- EP-A- 0 201 088
- EP-A- 0 367 182
- IBM TECHNICAL DISCLOSURE BULLETIN. vol. 26, no. 5, Octobre 1983, NEW YORK US pages 2272 - 2275 J.R VOLK 'Multiplex interface control in a closed-ring network'

## Description

La présente invention concerne une architecture de système multiprocesseur en tableau de processeurs élémentaires organisés selon une structure parallèle.

Cette invention trouve de nombreuses applications dans le domaine du traitement de données et, plus particulièrement, des données relatives à des éléments d'images (ou pixels).

En effet, les traitements d'images classiques comportent plusieurs niveaux de traitement. De façon classique l'homme de l'art considère trois niveaux de traitement :
- un bas niveau, qui consiste en un traitement de l'image, issue de capteurs, pour en déduire une image filtrée (on parle aussi de "traitements ioniques" lorsqu'il s'agit du domaine de traitement d'images) ;
- un moyen niveau, qui consiste à extraire de l'image filtrée, les symboles utiles dans la suite du traitement par une transformation des données d'un format iconique vers un format symbolique (traitement que l'on appelle également "traitements symboliques").
- un haut niveau, qui consiste à traiter ces symboles puis à les transformer pour en déduire les actions à effectuer. Ce niveau contient l'intelligence du traitement d'images car il contient, notamment, les algorithmes de reconnaissance de forme et les prises de décision.

Le bas niveau est mis en oeuvre dans de nombreux systèmes multiprocesseurs de type SIMD (Single Instruction Stream Multiple Data Stream) c'est-à-dire des processeurs effectuant une même opération sur des données différentes.

Le haut niveau est mis en oeuvre au contraire dans des systèmes multiprocesseurs de type MIMD (Multiple Instruction Stream Multiple Data Stream) c'est-à-dire des structures complexes permettant un parallélisme, à la fois au niveau des données, et au niveau des instructions.

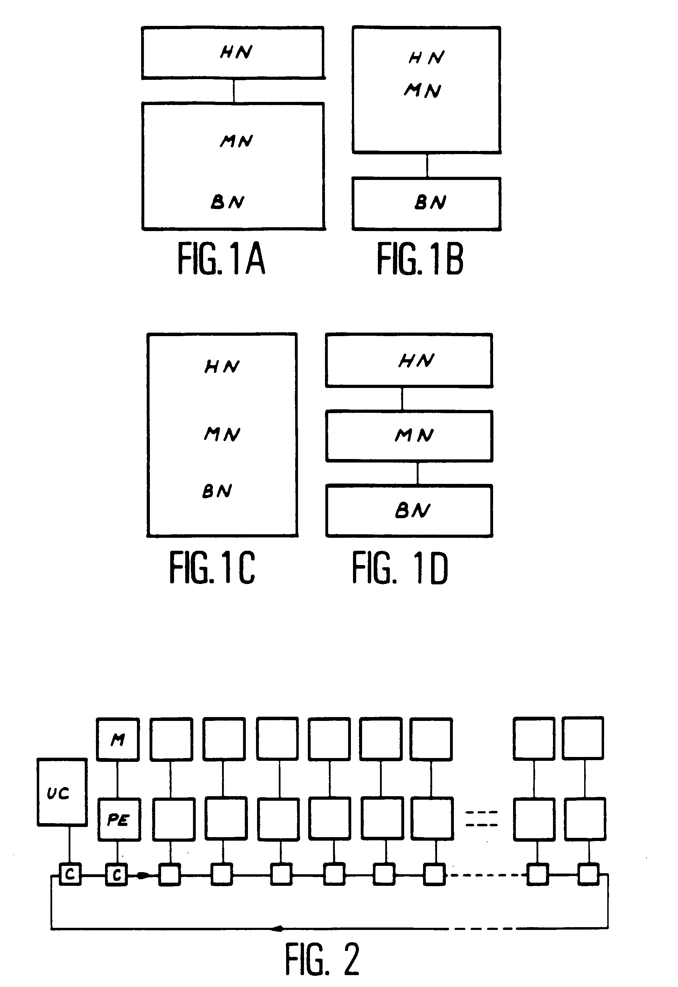

Le moyen niveau est, quant à lui, rarement parallélisé. Quatre approches ont cependant été proposées, ces approches étant représentées sur les figures 1A, 1B, 1C et 1D, jointes en annexe.

Ainsi, sur ces figures 1A, 1B, 1C et 1D, on a représenté quatre approches d'architectures parallèles permettant le traitement moyen niveau.

Sur la figure 1A, on a représenté l'architecture "Bottom Up". Dans cette architecture, les possibilités du système multiprocesseur du bas niveau BN sont accrues afin de supporter les opérations du moyen niveau MN. Un système multiprocesseurs indépendant permet de traiter les opérations du haut niveau HN.

Sur la figure 1B, on a représenté l'architecture "Top Down". Dans cette architecture, les possibilités du système multiprocesseur effectuant les opérations du haut niveau HN sont modifiées afin d'y intégrer les traitements d'images du moyen niveau MN. Un système multiprocesseur indépendant permet de supporter les opérations du bas niveau BN.

Sur la figure 1C, on a représenté une architecture que l'on pourrait nommer "architecture unifiée", dans laquelle un seul système supporte les trois niveaux de traitement haut niveau HN, moyen niveau MN, bas niveau BN, l'architecture multiprocesseur se reconfigurant en cours de traitement.

Sur la figure 1D, on a représenté une architecture que l'on pourrait nommer "architecture naturelle" et qui inclut un système de traitement moyen niveau MN spécifique. Dans cette architecture, chaque niveau possède sa propre structure. Il est donc facile de passer d'une structuration de dimension 2 (cas d'une image) en une structuration symbolique. Cependant, cette architecture se révèle très lourde car elle nécessite trois systèmes, chaque système pouvant supporter un niveau de traitement différent.

Les architectures dites unifiées et Top Down sont difficiles à mettre en oeuvre : en effet, le bas niveau et le moyen niveau sont intégrables dans des systèmes de mode SIMD mais ce mode ne convient pas pour des traitements de haut niveau.

Il semble donc préférable de choisir une architecture Bottom Up dans laquelle le bas et le moyen niveau peuvent être implantés dans un même système de mode SIMD, le haut niveau étant alors implanté dans un second système travaillant en mode MIMD.

Des architectures de systèmes multiprocesseurs de type Bottom Up sont connues, ces systèmes effectuant, pour la plupart, très bien le traitement bas niveau mais c fficilement le traitement moyen niveau.

Un tel système a été décrit dans la demande de brevet publiée sous le numéro FR-A-2 623 310. Il s'agit du système multiprocesseur de traitements d'images nommé SYMPATI. Toutefois, ce système ne présente pas les performances optimales comme on va le voir dans la suite.

SYMPATI est un système multiprocesseur à mémoire distribuée comportant un grand nombre de processeurs. Ces processeurs sont organisés en ligne et possèdent une unité arithmétique et logique (ALU) d'une précision de 16 bits. L'image est distribuée de façon hélicoïdale sur les processeurs, lesquels possèdent un module de calcul d'adresse spécifique. Un système d'interconnexion synchrone permet des échanges entre processeurs élémentaires à courte distance. De plus, chaque processeur est libre de calculer sa propre adresse mémoire ; le système possède donc deux types d'adressage synchrone et asynchrone. Les performances de SYMPATI sont bonnes pour les traitements de bas niveau mais limitées pour les opérations de traitements d'images moyen niveau. En effet, pour ce type de traitement, il est nécessaire de solliciter un processeur hôte afin d'effectuer une redistribution des données, dans le but de maintenir un certain parallélisme. Effectivement, le passage de bas niveau à moyen niveau pose un problème : le nombre de données nécessaires à l'analyse d'une image (traitement moyen niveau) est inférieur au nombre initial d'éléments (pixels) de cette image et nécessite une redistribution de celles-ci.

Un autre inconvénient de la structure actuelle de SYMPATI concerne l'accès entre processeurs élémentaires à longue distance : cet accès demande un temps de traitement considérable. De plus, la mise en oeuvre de transferts aléatoires est complexe sur SYMPATI.

Par ailleurs, plusieurs documents décrivent des réseaux de communication en anneau entre homologues, c'est-à-dire entre sous-systèmes interconnectés de même niveau. En particulier, le document intitulé "Multiplex interface control in a closed ring network" de J. R. VOLK, IBM Technical Disclosure Bulletin, vol. 26, no. 5, October 1983, New York US, décrit un tel réseau de communication en anneau dans lequel les sous-systèmes interconnectés sont de même nature, chaque sous-système comprenant sa propre unité centrale.

La présente invention permet justement de remédier à ces inconvénients, en proposant un système d'interconnexion adaptable sur les systèmes multiprocesseurs, SIMD, dont un exemple de mise en oeuvre est SYMPATI. Ce système d'interconnexion, également appelé réseau de communication, permet tous types d'échange entre les différents processeurs du système, à savoir : l'intercommunication de chaque processeur vers n'importe quel autre processeur, la communication d'un processeur vers tous les autres processeurs, et la communication de tous les processeurs vers un seul processeur. Il permet ainsi une distribution de données permettant de gérer efficacement les ressources disponibles, à savoir les processeurs élémentaires. Ces processeurs sont organisés selon une structure en tableau dans laquelle les processeurs sont disposés en réseaux généralement rectangulaires. Chaque processeur peut être associé à un pixel d'une image, ou à un groupe de pixels, et il a accès aux pixels voisins grâce aux liaisons d'interconnexion citées précédemment. Les processeurs sont organisés selon une structure parallèle, c'est-à-dire que tous les processeurs, désirant effectuer un traitement, effectuent le même traitement en même temps.

De façon plus précise, la présente invention concerne un système de processeurs élémentaires en tableau, organisés selon une structure parallèle, et comprenant des mémoires respectivement reliées aux processeurs élémentaires, ainsi que des moyens d'interconnexion desdits processeurs entre eux, caractérisé en ce que les moyens d'interconnexion des processeurs comprennent des cellules affectées et reliées chacune à un processeur, et reliées aux cellules des processeurs voisins dans le tableau, la cellule du dernier processeur du tableau étant connectée à la cellule du premier processeur du tableau de sorte que les cellules, ainsi reliées, forment un réseau en anneau dans lequel circulent des messages émis par au moins un processeur à destination d'au moins un autre processeur.

Avantageusement, les processeurs sont organisés pour effectuer des traitements de façon synchrone, et le réseau de cellules pour permettre des accès asynchrones vers lesdits processeurs.

Selon l'invention, le système comprend une unité centrale de commande apte à commander l'entrée et/ou la sortie des informations dans le réseau en anneau, ainsi que leur décalage le long dudit anneau. Elle peut être connectée au réseau en anneau par l'intermédiaire d'une cellule similaire aux cellules affectées aux processeurs.

De plus, chaque cellule comprend des moyens pour reconnaitre les messages qui sont adressés au processeur auquel elle est associée. Elle comprend en outre des moyens pour stocker des informations contenues dans les messages reçus ou à émettre et des moyens pour gérer un dialogue avec les cellules voisines et l'unité de commande. Les moyens de stockage sont connectés aux moyens de reconnaissance, eux-mêmes reliés au réseau en anneau. De plus, les moyens de gestion sont connectés à la fois au réseau, aux moyens de stockage et aux moyens de reconnaissance.

Selon une caractéristique de l'invention, les moyens pour reconnaitre les messages sont aptes à s'inhiber lorsqu'un processeur envoie un message généralisé à tous les autres processeurs.

De façon avantageuse, les cellules du réseau en anneau sont connectées à des cellules identiques d'un second réseau en anneau, dans lequel les messages circulent dans un sens opposé au sens de circulation des messages dans le premier réseau.

Pour un meilleur traitement des données de l'image, le système peut comprendre des modules spécialisés tels qu'une unité de traitement en arithmétique flottante (FPU), connectés, par l'intermédiaire d'une cellule, au réseau en anneau.

Le système comprend, de plus, une mémoire globale connectée, par l'intermédiaire d'une cellule, au réseau en anneau. Le système comprend également au moins une interface reliée à la cellule de la mémoire globale et à une cellule du réseau en anneau.

D'autres avantages et caractéristiques de l'invention ressortiront mieux de la description qui va suivre, donnée à titre illustratif, mais nullement limitatif, en référence aux dessins dans lesquels :
- les figures 1A, 1B, 1C et 1D, déjà décrites, représentent quatre approches d'architectures parallèles pour le traitement moyen niveau ;
- la figure 2 représente le schéma de principe du système d'interconnexion selon l'invention ;
- la figure 3 représente le schéma d'une cellule ;
- la figure 4 représente le système d'interconnexion selon l'invention ; on a représenté sur cette figure, les liaisons entre les cellules, les processeurs, les mémoires et l'unité de commande reliés par l'intermédiaire dudit système d'interconnexion ;
- la figure 5 représente le schéma d'un système d'interconnexion selon un mode de réalisation plus performant de l'invention ;

Sur la figure 2, on a représenté le schéma de principe du système d'interconnexion, appelé également réseau intelligent ou réseau en anneau. Ce système d'interconnexion comprend des stations reliées entre elles de manière à former une bouc Le, d'où l'application de réseau en anneau. Chaque station de ce réseau en anneau peut émettre ou recevoir un signal. La réception de ce signal se fait par reconnaissance d'un message circulant dans l'anneau.

On appelle station l'ensemble constitué d'une cellule, (appelée également noeud), d'un processeur élémentaire et d'une mémoire. Ainsi, le réseau en anneau est constitué d'un ensemble de cellules C connectées, respectivement, à un processeur élémentaire PE lui-même relié à une mémoire M. Un échange d'informations peut ainsi s'établir directement entre une mémoire M et son processeur PE associé, et entre un processeur PE et sa cellule C associée. Chaque cellule C est de plus reliée, par sa sortie, à l'entrée de la cellule suivante dans le réseau. Ainsi, chaque processeur PE peut échanger des informations avec un autre processeur, par l'intermédiaire de leurs cellules.

En effet, dans le système multiprocesseur selon l'invention, la mémoire est du type mémoire distribuée, c'est-à-dire que chaque processeur PE peut être en relation avec une mémoire M reliée à un autre processeur du système. Le mode d'interconnexion en anneau de l'invention permet, justement, cet échange entre chacun des processeurs et la mémoire associée à chacun des autres processeurs du réseau. Ce dialogue entre processeurs est établi et géré par les cellules associées à chacun desdits processeurs. Ainsi, les processeurs qui veulent émettre un message écrivent ledit message qui est envoyé dans le réseau par leur cellule associée.

Ce message, comme tous les messages envoyés dans l'anneau par n'importe quel processeur, est constitué de trois champs :
- un champ de données à transmettre,
- un champ d'adresses comportant le numéro du processeur à qui le message est destiné et son adresse locale, et
- un champ de contrôle.

Le message envoyé par un processeur PE circule dans l'anneau et, dès que le processeur à qui il est destiné reçoit ledit message, ce dernier processeur recupère la donnée et indique dans le champ de contrôle que ladite donnée a correctement été reçue. Chaque message circule ainsi, de façon indépendante ; on parle de distribution asynchrone des messages.

A ce réseau, est également connectée une unité de commande centrale. Cette unité de commande (UC) est connectée à une cellule C, identique aux cellules des processeurs, et peut donc utiliser le réseau pour ses échanges d'informations. Cette unité de commande centrale permet notamment de gérer la circulation des messages dans l'anneau. Ainsi, lorsque le réseau est vide, l'autorisation d'une nouvelle écriture, c'est-à-dire d'un nouvel envoi de message, est donnée par ladite unité de commande.

Pendant que les cellules et l'unité de commande centrale gèrent respectivement la réception et la circulation des messages dans l'anneau, les processeurs ont la possibilité et la capacité d'effectuer d'autres traitements, tels que les traitements de bas niveau.

Ainsi, le réseau dit "intelligent" travaille selon un mode séquentiel asynchrone dans lequel un message fait le tour de l'anneau en quelques cycles-machine du processeur (environ 8 cycles-machine selon le mode de réalisation décrit de l'invention).

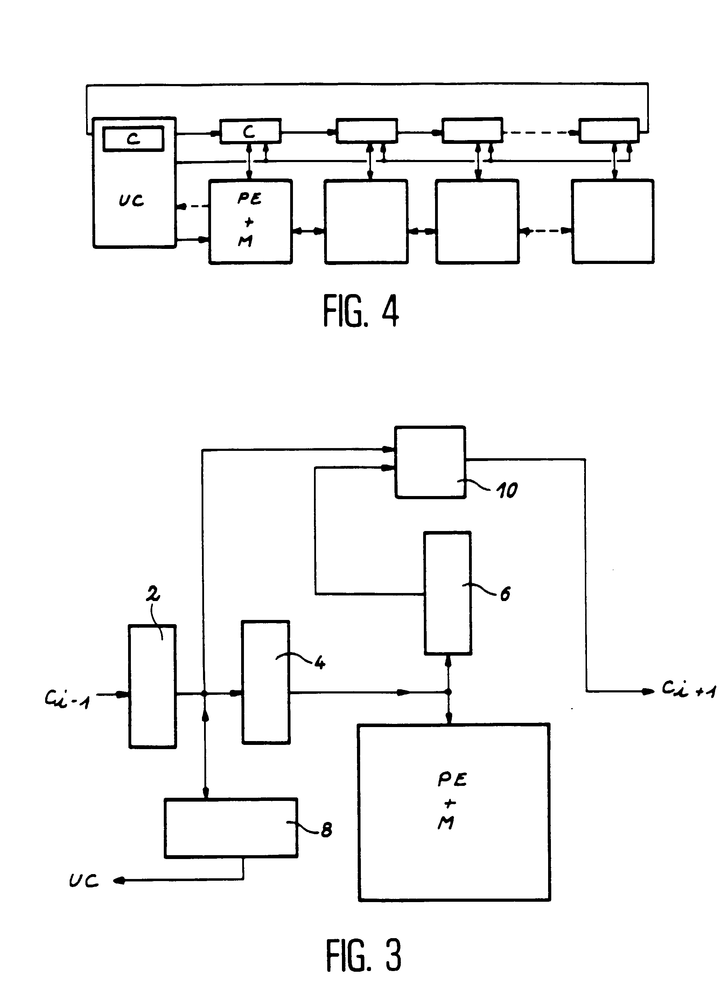

Sur la figure 3, on a représenté schématiquement une cellule C. Cette cellule comprend un module 2 de reconnaissance des messages, des tampons 4 et 6, une logique de contrôle 8 et une interface 10.

Les tampons 4 et 6 peuvent être, selon les modes de réalisations, des registres, des mémoires ou des listes d'attente FIFO (en anglais : First In, First Out). Dans le mode de réalisation décrit, ces tampons 4 et 6 sont des registres qui, associés aux registres des autres cellules, forment un registre à décalage parallèle et rebouclé dans lequel circulent très rapidement les messages. Le tampon 6 mémorise un message complet, tandis que le tampon 4 mémorise un message sans le numéro de processeur qui y est inscrit.

On considère la cellule représentée sur la figure 3 comme étant la cellule Ci du i^{ème} processeur du réseau. Les messages, reçus par cette cellule Ci, arrivent de la cellule Ci-1. Chaque message entre dans la cellule Ci par le module 2 de reconnaissance de message, ce module 2 permettant de déterminer si ledit message est adressé, ou n'est pas adressé, à son processeur PEi associé. Ce module 2 de reconnaissance des messages compare le numéro du processeur qui lui est associé au numéo de processeur présent dans le champ adresse du message reçu. S'il y a coïncidence, la donnée et l'adresse sont mémorisées dans le tampon 4 et le processeur signale qu'il a lu le message en figeant, par exemple, un bit DL (donnée lue) contenu dans le champ de contrôle du message. Tant que le message n'a pas été lu, c'est-à-dire tant que l'unité centrale n'a pas détecté le bit DL, le réseau est maintenu en activité.

Ainsi, si le message reçu n'est pas reconnu par le module 2 de reconnaissance de la cellule Ci, il est alors dirigé sur une interface 10 reliée, en entrée, au module 2 de reconnaissance et à la logique de contrôle 8, et il est ensuite envoyé, vers le module 2 de reconnaissance de la cellule Ci+1. Au contraire, lorsque le message est reconnu par le module 2 de reconnaissance des messages, la donnée contenue dans ledit message est envoyée dans le registre 4 relié, en entrée, audit module 2 et à la logique de contrôle 8. Paraléllement, un signal est envoyé, dans le champ de contrôle du message reçu, par ladite logique de contrôle 8, ce signal indiquant à l'unité centrale UC que le message circulant dans l'anneau a bien été reçu par le processeur à qui il était destiné. Le processeur peut alors lire la donnée qui lui était adressée et, éventuellement, la mémoriser dans la mémoire Mi qui lui est directement connectée. Après lecture de la donnée contenue dans le message (bit DL détecté), un autre message est mis en circulation dans l'anneau.

De la même façon, lorsque le processeur PEi décide d'envoyer un message, il écrit ce message dans le registre 6, connecté en entrée/sortie audit processeur, et relié en sortie à l'interface 10 qui assure l'envoi du message vers le module 2 de reconnaissance de la cellule voisine Ci+1. En mode SIMD, cette opération d'écriture est effectuée en même temps par tous les processeur désirant envoyer un message, c'est-à-dire que ces processeurs travaillent en parallèle.

Selon un mode de réalisation de l'invention, le module 2 de reconnaissance des messages a la possibilité de s'inhiber (de se rendre transparent) lorsqu'un processeur envoie une donnée globale, c'est-à-dire une donnée destinée à tous les autres processeurs du réseau. Lorsque les modules 2 de reconnaissance des messages des processeurs non-émetteurs deviennent ainsi transparents, la donnée se trouve alors disponible sur chaque noeud du réseau c'est-à-dire dans chaque cellule du réseau.

De façon plus fonctionnelle, le rôle de chaque cellule est primordial pour le bon fonctionnemnt du système d'interconnexion et consiste à :
- déterminer si un message est adressé à son processeur associé ;
- commander les opérations de lecture et d'écriture des données dans la mémoire de son processeur associé ;
- mémoriser les messages à émettre ou à recevoir ;
- s'inhiber lorsqu'un processeur, différent de son processeur associé, a envoyé une information à l'ensemble des autres processeurs, dont son processeur associé ;
- gérer le dialogue avec ses cellules voisines et avec l'unité de commande centrale.

De façon complémentaire, l'unité de commande centrale a pour rôle de gérer les conflits apparaissant lors d'accès simultanés à une mémoire, de prendre en compte les signaux envoyés par les tampons 4 et 6 (par exemple, tampons pleins...) pour intervenir sur le déroulement du programme en cours et, en cas de problème, générer un message d'erreur. De plus, l'unité de commande peut intégrer des fonctions permettant d'effectuer les entrées/sorties des images plus rapidement en utilisant le réseau car les registres ne sont pas intégrés dans les processeurs élémentaires, ce qui permet une vitesse de fonctionnement accrue.

Sur la figure 4, on a représenté, selon un mode de réalisation de l'invention, le système multiprocesseur comportant l'unité centrale, les processeurs et le réseau tel que représenté sur la figure 2. Cette figure montre également les relations entre chaque élément du système multiprocesseur. Comme décrit sur la figure 2, on voit que les cellules sont reliées entre elles en anneau.L'unité centrale UC est connectée à une cellule du réseau, cette cellule pouvant, selon certains modes de réalisation de l'invention, être intégrée dans l'unité centrale.

Cette unité centrale est également reliée à chaque cellule afin d'envoyer à chacune desdites cellules un signal d'horloge. De plus, ladite unité centrale reçoit de chacune desdites cellules les bits de contrôle envoyés par la logique de contrôle de la cellule. Les signaux d'horloge et ces bits de contrôle peuvent circuler sur un même lien physique. De plus, l'unité centrale est reliée à son processeur voisin dans l'anneau, ce processeur, comme tous les autres, étant lui-même relié à ses voisins.

Selon un mode de réalisation de l'invention, le premier processeur du réseau peut avoir une liaison double avec l'unité de commande (l'unité centrale envoie des signaux au processeur et le processeur envoie des signaux à l'unité de commande) afin de rapatrier, vers ladite unité de commande, des bits d'information provenant dudit processeur.

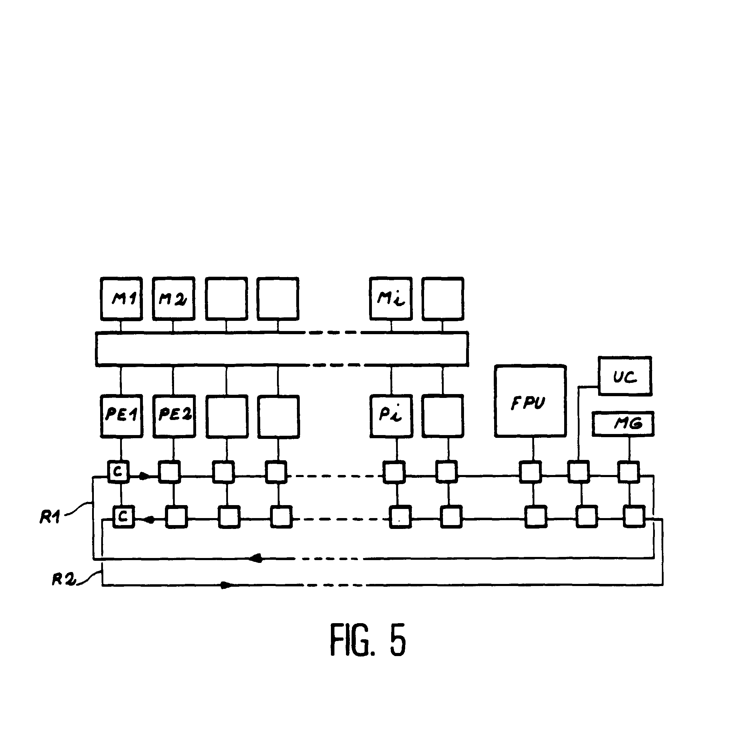

Sur la figure 5, on a représenté un schéma de réseau intelligent correspondant à un autre mode de réalisation de l'invention. Cet autre mode de réalisation permet d'optimiser les échanges entre les processeurs.

En effet, dans ce mode de réalisation de l'invention, le système d'interconnexion comporte deux réseaux R1 et R2 en anneau, les informations circulant dans des sens opposés dans chacun des deux réseaux. Dans le premier réseau R1, les messages circulent dans le sens des numéros de processeurs croissants et dans le second réseau R2, les messages circulent dans le sens opposé au sens du premier réseau R1. Pour un nombre de processeurs supérieur à 32, il est, en effet, intéressant d'utiliser deux réseaux à sens d'échanges opposés. Par exemple, si le processeur PE1 veut dialoguer avec le processeur PEi (i = 250, par exemple), il est largement plus intéressant, c'est-à-dire plus rapide, d'échanger des messages à travers le second réseau dans lequel les messages circulent dans le sens négatif par rapport au sens croissant des numéros des processeurs. Au contraire, si le processeur PE1 veut envoyer un message au processeur PE2, le temps de circulation du message dans le premier réseau est beaucoup plus faible qu'il ne le serait dans le second réseau en anneau.

Le choix du réseau à utiliser pour la transmission des messages est effectuée par observation de l'adresse du processeur auquel est destiné le message. Le réseau permettant le plus court trajet dans l'anneau est, bien entendu, choisi.

Le deuxième réseau R2 en anneau est identique au premier réseau R1, c'est-à-dire qu'il comporte autant de cellules que le premier réseau, chaque cellule étant d'une part reliée à ses cellules voisines et, d'autre part, reliée à la cellule correspondante du premier réseau. Sur cette figure 5, on a également représenté des modules particuliers, tels que la FPU (unité de traitement en arithmétique flottante) et la mémoire globale MG, ces modules pouvant offrir une puissance et une souplesse supplémentaire au système multiprocesseur.

En effet la FPU (unité de traitement en arithmétique flottante) peut être intégrée au système par l'intermédiaire d'une cellule reliée au réseau et offrir, par sa présence, une puissance de traitement supérieure.

La mémoire globale MG est, comme son nom l'indique, une mémoire commune à tous les processeurs du réseau et à laquelle chaque processeur peut accéder directement par le réseau.

Parmi les modules de calcul particuliers autres que la FPU, utilisables dans l'invention, on peut citer un module diviseur apte à effectuer le rapport entre les contenus de deux registres, ou un processeur de traitement de listes chaînées.

De manière générale, le système d'intercommunication entre processeurs selon l'invention est utilisable sur la plupart des systèmes de type SIMD et permet un traitement de moyen niveau efficace grâce au maintien du parallélisme lors, notamment, des phases de distribution de données.

## Revendications

1. Système de processeurs élémentaires SIMD en tableau, organisés selon une structure parallèle et comprenant des mémoires (M) respectivement reliées aux processeurs élémentaires (PE), ainsi que des moyens d'interconnexion desdits processeurs élémentaires entre eux, chacun de ces processeurs élémentaires étant apte à effectuer des traitements de bas niveau de façon synchrone,
caractérisé, *d'une part,* en ce que les processeurs élémentaires comprennent chacun un module d'adressage asynchrone et en ce que les moyens d'interconnexion des processeurs élémentaires comprennent des cellules (C) affectées et reliées chacune à un processeur élémentaire, et reliées aux cellules des processeurs élémentaires voisins dans le tableau, la cellule du dernier processeur élémentaire du tableau étant connectée à la cellule du premier processeur élémentaire du tableau de sorte que les cellules, ainsi reliées, forment un réseau en anneau dans lequel circulent des messages permettant des échanges asynchrones de données entre au moins deux processeurs élémentaires et leur mémoire respective associée, lesdits processeurs ainsi organisés étant aptes à effectuer des traitements de moyen niveau faisant intervenir des échanges de données asynchrones et, 'd'autre part, en ce qu'il comprend une unité centrale de commande (UC) apte à commander l'entrée et/ou la sortie, dans le réseau en anneau, des données contenues dans les messages, ainsi que la circulation desdites données dans ledit anneau.

2. Système selon la revendication 1, caractérisé en ce que ladite unité centrale de commande est connectée au réseau en anneau par l'intermédiaire d'une cellule.

3. Système selon la revendication 2, caractérisé en ce que chaque cellule comprend des moyens de reconnaissance (2), reliés au réseau en anneau, pour reconnaître les messages adressés au processeur élémentaire auquel elle est reliée, des moyens de stockage (4, 6), reliés aux moyens de reconnaissance, pour mémoriser les données contenues dans les messages reçus ou à émettre, et des moyens de gestion (8, 10) reliés au réseau et aux moyens de stockage et de reconnaissance, pour gérer un dialogue avec les cellules voisines et l'unité de commande.

4. Système selon la revendication 3, caractérisé en ce que les moyens de reconnaissance sont aptes à s'inhiber lorsqu'un processeur élémentaire envoie un message généralisé à tous les autres processeurs.

5. Système selon l'une quelconque des revendications 1 à 4, caractérisé en ce que les cellules du réseau sont respectivement reliées à des cellules identiques d'un second réseau dans lequel les messages circulent dans un sens opposé au sens de circulation des messages dans le premier réseau.

6. Système selon l'une quelconque des revendications 1 à 5, caractérisé en ce qu'il comprend un module de calcul particulier, connecté à une cellule elle-même reliée au réseau en anneau.

7. Système selon la revendication 6, caractérisé en ce que ledit module de calcul particulier est une unité de traitement en arithmétique flottante.

8. Système selon l'une quelconque des revendications 1 à 7, caractérisé en ce qu'il comprend une mémoire globale (MG) connectée à une cellule elle-même reliée au réseau en anneau.

9. Application du système selon l'une quelconque des revendications 1 à 8 au traitement d'images, dans laquelle les processeurs élémentaires ainsi organisés sont aptes à effectuer à la fois des traitements de bas niveau (traitements ioniques) et des traitements de moyen niveau (traitements symboliques).

## Patentansprüche

1. System mit paralleler SIMD-Elementarprozessoren-Matrix, Speicher (M) umfassend, jeweils verbunden mit den Elementarprozessoren (PE), sowie Zwischenverbindungseinrichtungen besagter Elementarprozessoren untereinander, wobei jeder dieser Elementarprozessoren fähig ist, Verarbeitungen der unteren Ebene auf synchrone Weise auszuführen,
dadurch gekennzeichnet,
daß jeder dieser Elementarprozessoren einerseits einen Asynchron-Adressier-Modul umfaßt und daß die Zwischenverbindungseinrichtungen der Elementarprozessoren Zellen (C) umfassen, jede einem Elementarprozessor zugeteilt und mit ihm verbunden, und verbunden mit den Zellen der in der Matrix benachbarten Elementarprozessoren, wobei die Zelle des letzten Elementarprozessors der Matrix verbunden ist mit der Zelle des ersten Elementarprozessors der Matrix, so daß die so verbundenen Zellen ein ringförmiges Netz bilden, in dem Meldungen bzw. Nachrichten zirkulieren, die asynchrone Datenaustausche zwischen wenigstens zwei Elementarprozessoren und ihrem jeweils zugeteilten Speicher ermöglichen, wobei diese derart organisierten Prozessoren fähig sind, Verarbeitungen der mittleren Ebene durchzuführen, dabei asynchrone Datenaustausche benutzend, und andrerseits dadurch, daß es eine zentrale Steuereinheit (UC) umfaßt, fähig, bei dem ringförmigen Netz den Eingang und/oder Ausgang der in den Meldungen bzw. Nachrichten enthaltenen Daten zu steuern sowie den Fluß dieser Daten in besagtem Netz.

2. System nach Anspruch 1, dadurch gekennzeichnet, daß die genannte zentrale Steuereinheit mit dem ringförmigen Netz über eine Zelle verbunden ist.

3. System nach Anspruch 2, dadurch gekennzeichnet, daß jede Zelle Erkennungseinrichtungen (2) umfaßt, verbunden mit dem ringförmigen Netz, um Meldungen zu erkennen, die an den Elementarprozessor adressiert sind, mit dem sie verbunden ist, sowie Speichereinrichtungen (4, 6), verbunden mit den Erkennungseinrichtungen, um die in den empfangenen oder zu sendenden Meldungen enthaltenen Daten zu speichern, und Verwaltungseinrichtungen (8, 10), verbunden mit dem Netz und mit den Speicher- und den Erkennungseinrichtungen, um einen Dialog mit den benachbarten Zellen und der Steuereinheit zu leiten.

4. System nach Anspruch 3, dadurch gekennzeichnet, daß die Erkennungseinrichtungen fähig sind, sich zu sperren, wenn der Elementarprozessor eine verallgemeinerte Meldung an alle anderen Prozessoren sendet.

5. System nach einem der Ansprüche 1 bis 4, dadurch gekennzeichnet, daß die Zellen des Netzes jeweils verbunden sind mit identischen Zellen eines zweiten Netzes, in dem die Meldungen in einer zur Richtung des ersten Netzes entgegengesetzten Richtung zirkulieren.

6. System nach einem der Ansprüche 1 bis 5, dadurch gekennzeichnet, daß es einen besonderen Rechenmodul umfaßt, verbunden mit einer Zelle, die selbst mit dem ringförmigen Netz verbunden ist.

7. System nach Anspruch 6, dadurch gekennzeichnet, daß der genannte besondere Rechenmodul eine Gleitarithmetik-Recheneinheit ist.

8. System nach einem der Ansprüche 1 bis 7, dadurch gekennzeichnet, daß sie einen Globalspeicher (MG) umfaßt, verbunden mit einer Zelle, die selbst mit dem ringförmigen Netz verbunden ist.

9. Einsatz des Systems nach einem der Ansprüche 1 bis 8 in der Bildverarbeitung, bei dem die derart organisierten Elementarprozessoren fähig sind, zugleich Verarbeitungen der unteren Ebene (ikonische Verarbeitungen) und der mittleren Ebene (symbolische Verarbeitungen) durchzuführen.

## Claims

1. System of SIMD elementary processors board organized according to a parallel structure and including memories (M) respectively connected to the elementary processors (EP), as well as means for interconnecting said elementary processors, each of these elementary processors being able to carry out low level processings in synchronous manner, characterized in that on the one hand the elementary processors each include an asynchronous addressing module and in that the elementary processor interconnection means include cells (C) each allocated and connected to an elementary processor and connected to the cells of the neighbouring elementary processors in the board, the cell of the final elementary processor being connected to the cell of the first elementary processor of the board so that the cells, thus connected, form a ring network in which messages circulate allowing for asynchronous exchanges of data between at least two elementary processors and their respective associated memory, said organized processors being able to carry out average level processings able to make exchanges of asynchronous data and in that on the other hand it includes a central control processing unit (CU) able to order the inputting and/or outputting in the ring network of the data contained in the messages, as well as the circulation of said data in said ring.

2. System according to claim 1, characterized in that said central control unit is connected to the ring network by means of a cell.

3. System according to claim 2, characterized in that each cell includes recognition means (2) connected to the ring network so as to recognize the messages addressed to the elementary processor to which it is connected, storage means (4, 6) connected to the recognition means for storing the data contained in the messages received or to be emitted, and management means (8, 10) connected to the network and the storage and recognition means so as to manage a dialogue with the neighbouring cells and the control unit.

4. System according to claim 3, characterized in that the recognition means are able to be inhibited when an elementary processor sends a generalized message to all the other processors.

5. System according to any one of the claims 1 to 4, characterized in that the cells of the network are respectively connected to the identical cells of a second network in which the messages circulate in a direction opposite the circulation direction of the message in the first network.

6. System according to any one of the claims 1 to 5, characterized in that it includes a particular calculation module connected to a cell, the latter being connected to the ring network.

7. System according to claim 6, characterized in that said particular calculation module is a floating arithmetic processing unit.

8. System according to any one of the claims 1 to 7, characterized in that it includes an overall memory (OM) connected to a cell, the latter being connected to the ring network.

9. Application of the system according to any one of the claims 1 to 8 for the processing of images in which the elementary processors, once organized, are able to carry out low level processings (ionic processings) and average level processings (symbolic processings).
